# EUROPEAN PATENT SPECIFICATION

(11) **EP 2 746 988 B1**
(45) Date of publication and mention of the grant of the patent: **19.03.2025**
(21) Application number: 12199334.9
(22) Date of filing: 24.12.2012
(51) Int. Cl.: G06V 40/20

(54) **Method for identifying a user manipulating a touchscreen device**
Verfahren zur Identifizierung eines eine Berührungsbildschirmvorrichtung handhabenden Benutzers
Procédé pour identifier un utilisateur manipulant un dispositif à écran tactile

(43) Date of publication of application: 25.06.2014
(73) Proprietor: Orange, 92130 Issy-les-Moulineaux (FR)
(72) Inventor: Jonczyk, Maciej, 01-923 Warszawa (PL); Karpinski, Michal, 06-521 Wisniewo (PL); Staroszczyk, Tomasz, 03-717 Warszawa (PL)
(74) Representative: Cabinet Beau de Loménie

(56) References cited:
- US-A1- 2010 225 443
- NAPA SAE-BAE ET AL: "Biometric-rich gestures", PROCEEDINGS OF THE 2012 ACM ANNUAL CONFERENCE ON HUMAN FACTORS IN COMPUTING SYSTEMS, CHI '12, 5 May 2012 (2012-05-05) - 10 May 2012 (2012-05-10), New York, New York, USA, pages 977, XP055084125, ISBN: 978-1-45-031015-4, DOI: 10.1145/2207676.2208543
- CHRISTOPHER VARENHORST: "Passdoodles; a Lightweight Authentication Method", INTERNET CITATION, 27 April 2004 (2004-04-27), pages I - II, XP002638827, Retrieved from the Internet <URL:http://people.csail.mit.edu/emax/papers/> [retrieved on 20110525]

## Description

### Background of the invention

The field of the invention is the field of touch recognition systems, and more particularly the field of identification or recognition of persons manipulating a touchscreen device.

A conventional method for identifying the user of a touchscreen device consists in verifying whether a numeral or graphical code input by the user matches a secret code selected by said user.

This conventional method requires that the user remembers the above mentioned secret code. The following prior art is acknowledged:
NAPA SAE-BAE ET AL: "Biometric-rich gestures", PROCEEDINGS OF THE 2012 ACM ANNUAL CONFERENCE ON HUMAN FACTORS IN COMPUTING SYSTEMS, CHI '12, 5 May 2012 (2012-05-05), - 10 May 2012 (2012-05-10), page 977, XP055084125, New York, New York, USA DOI: 10.1145/2207676.2208543 ISBN: 978-1-45-031015-4 CHRISTOPHER VARENHORST: "Passdoodles; a Lightweight Authentication Method", INTERNET CITATION, 27 April 2004 (2004-04-27), pages I-II, XP002638827, Retrieved from the Internet: URL:http://people.csail.mit.edu/ emax/papers/ [retrieved on 2011-05-25]
US 2010/225443 A1 (BAYRAM SEVINC [US] ET AL) 9 September 2010 (2010-09-09)

### Object and summary of the invention

The present invention proposes a method for identifying a user of a touchscreen device which does not present the drawbacks of the conventional methods.

More precisely, the invention relates to a method for identifying a user of a touchscreen device according to the geometry of their hand and/or to characteristics of the interaction of their fingertips with the touchscreen device.

The invention proposes in particular to compare said geometry and/or interaction characteristics with information of the same type in the various embodiments as defined in the appended claims.

The following aspects describe various implementation details of the claimed invention. A first aspect of the invention concerns a database comprising, for at least one hand of at least one user, a record for a pattern, said record comprising an identifier of said user, and at least one data structure among:
- a first data structure comprising, for at least one pair of fingers of said hand, a distance between the fingertips of said fingers;
- a second data structure comprising, for at least two fingers of said hand, an order assigned to said fingers for contacting a touchscreen device; and
- a third data structure comprising a time interval.

A second aspect of the invention concerns a method of recording, in a database, a record for a pattern associated to one hand of one user, said method comprising:
- a step of recording an identifier of said user in said record; and
- at least one step among :
   - recording in a first data structure of said record, for at least one pair of fingers of said hand, a distance between the fingertips of said fingers ;
   - recording in a second data structure of said record, for at least two fingers of said hand, an order assigned to said fingers for contacting a touchscreen device;
   - recording a time interval in a third data structure of said record.

A third aspect of the invention relates to a method of identifying a user according to an hand tap having on a touchscreen device, this method comprising:
- at least one step among:
   - a step of acquiring the coordinates of a plurality of fingertips contacts on said touchscreen device, of determining, for at least one pair of said fingertips contacts, the distance between said fingertips contacts and of recording same in a first data structure ;
   - a step of determining the order in which at least two fingertips have contacted said touchscreen device and of recording same in a second data structure;
   - a step of determining a duration for which a given number of fingertips are all together in contact with said touchscreen device and of recording same in a third data structure;
- a step of comparing at least one of said first, second or third data structure with the corresponding first, second or third data structure of at least one record for a pattern recorded in a database as mentioned above;
- a step of deciding whether this hand corresponds or not to said pattern according to the result of said comparison step and ; if it is the case
- a step of outputting the user identifier recorded in the record for this pattern.

The invention provides three fundamental features for recognizing the hand of a user:
- first, according to the distance between fingertips positions on the touchscreen; the basis for the use of these distances coming from the fact that every person has a different hand geometry or shape;
- second, according to the order in which fingertips are collected from the touchscreen, for example middle finger first, then thumb, ring finger, index finger and baby finger;
- third, according to the time interval during which all or a predetermined number of fingertips are all together in contact with the touch screen.

The invention therefore relates both (1) to the registration of biometric information for creating the database and (2) to the identification or recognition of a user by collecting their fingertips contacts characteristics and comparing said contacts with data sets stored in the database.

In one particular embodiment, the comparison of two data structures for comparing the user biometric information collected on the touch screen and the data sets in the database uses a Support Vector Machine classifier.

The invention also relates to a touchscreen device comprising:
- means for acquiring the coordinates of a plurality of fingertips contacts on said touchscreen device;
- means for determining for at least one pair of said fingertips contacts, the distance between said fingertips contacts and for recording said distance in a first data structure ;
- means for determining the order in which at least two fingertips have contacted said touchscreen device and means for recording said order in a second data structure;
- means for determining a duration during which a given number of fingertips are all together in contact with said touchscreen device and means for recording same in a third data structure;
- means for comparing at least one of said first, second or third data structure with the corresponding first, second or third data structure of at least one record for a pattern recorded in a database as mentioned above; and
- means for deciding whether said hand corresponds or not to the hand associated with said record according to the result of said comparison step ; and
- means for outputting the user identifier recorded in said record.

In one particular embodiment, the various steps of the recording method and/or the identifying method are determined by instructions of computer programs.

Consequently, the invention is also directed to a computer program on an information medium and which can be executed in a mobile terminal or more generally in a computer and includes instructions for executing the steps of the above recording method and/or the above identifying method.

The program can use any programming language and take the form of source code, object code, or a code intermediate between source code and object code, such as a partially compiled form, or in any other suitable form.

The invention is also directed to a computer-readable information medium containing instructions of the above computer program.

The information medium can be any entity or device capable of storing the program, for example storage means, such as a read only memory (ROM), for example a CD ROM or a microelectronic circuit ROM, or magnetic storage means, for example a floppy disk or a hard disk.

The information medium can instead be a transmissible medium such as an electrical or optical signal, which can be conveyed via an electrical or optical cable, by radio or by other means. The program of the invention can in particular be downloaded over an Internet type network.

Alternatively, the information medium can be an integrated circuit into which the program is incorporated, the integrated circuit executing the method in question or being used in its execution.

### Brief description of the drawings

Other characteristics and advantages of the present invention appear from the following description made with reference to the accompanying drawings that show an embodiment without any limiting character. In the figures:
- Figure 1 shows a touchscreen device in accordance with the invention;
- Figure 2 shows a database in accordance with the invention;
- Figure 3 shows, in the form of a flow chart, the main steps of a method of identifying a user in accordance with the invention; and
- Figure 4 shows, in the form of a flowchart, the main steps of a method of creating a record in a database in accordance with the invention.

### Detailed description of an embodiment of the invention

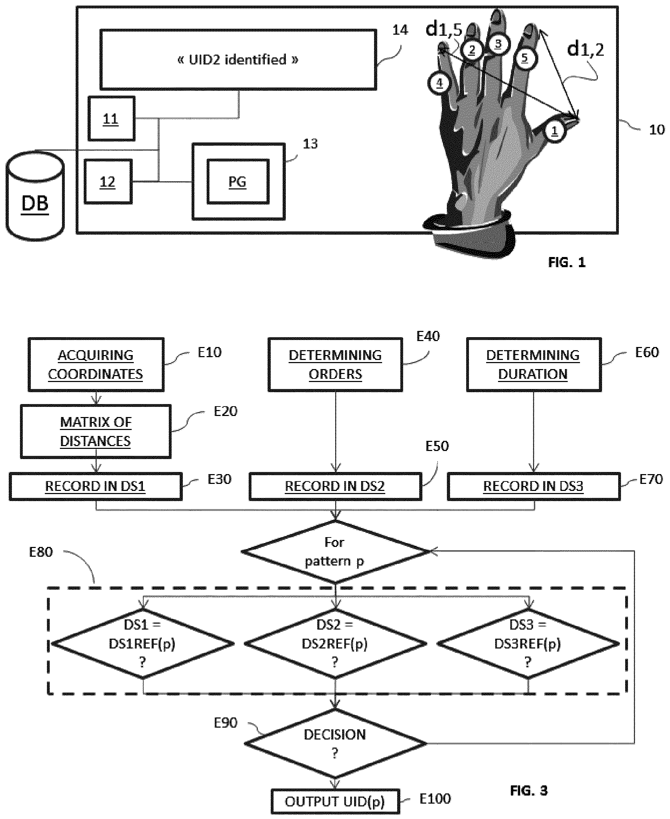

Figure 1 shows a touchscreen device 10 in accordance with the invention. In this specific embodiment, the touch screen device has the hardware architecture of a conventional computer. In particular, it comprises a processor 11, a read/write memory 12 of the random access memory (RAM) type, and a read-only memory 13 having recorded therein a computer program according to the invention and including instructions for executing the steps of the method represented by the flow chart shown in Figure 3.

The touchscreen device 10 also comprises a display 14 for displaying the identifier of a user when the user manipulating the touchscreen has been recognized according to the method of the invention.

In the example of Figure 1, we consider that the fingertips of the users contact the touchscreen according to the order below:
1^{st} contact: thumb (1^{st} finger)
2^{nd} contact: ring finger (4^{th} finger)
3^{rd} contact: middle finger (3^{rd} finger)
4^{th} contact: baby finger (5^{th} finger); and
5^{th} contact: index finger (2^{nd} finger)

This sequence can be represented as follows {1, 4, 3, 5, 2}.

In this description, d_{i,j} represents the distance between the contacts of fingertips i and j on the touchscreen, with:
- i, j = 1 for the thumb
- i, j = 2 for the index finger
- i, j = 3 for the middle finger
- i, j = 4 for ring finger
- i, j = 5 for the baby finger.

Only d_{1,2} (distance between the thumb and the index finger) and d_{1,5} (distance between the thumb and the baby finger) are represented for purpose of clarity.

In this example we also consider that the 5 fingers remained all together in contact with the touchscreen device 10 during 2,3s.

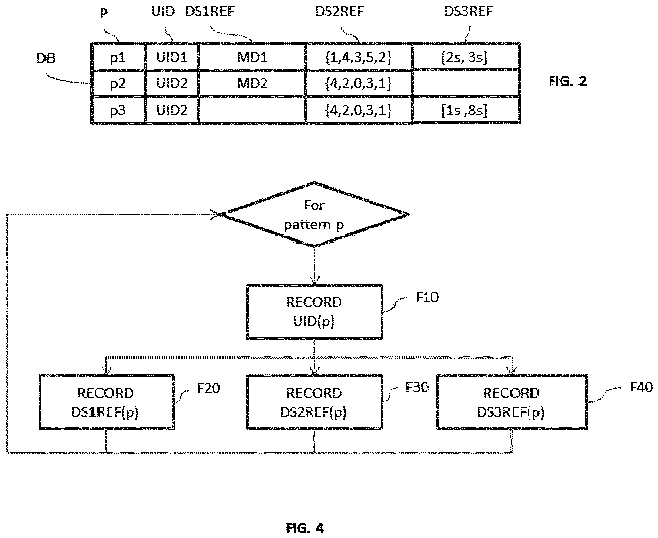

The touchscreen device 10 can access a database DB which will now be described in reference with Figure 2.

This database DB comprises 3 patterns p= p1, p2, p3, each pattern p being associated with a record comprising the identifier UID of a user and information relative to the geometry of their hand and/or to the characteristics of the interaction of their fingertips with the touchscreen device.

Two patterns may be associated with the same user: in figure 2; p2 and p3 are both patterns of the same user UID2.

A record for a pattern may comprise one or several data structures among a so called first data structure DS1REF, a so called second data structure DS2REF and a so called third data structure DS3REF.

The first data structure DS1REF, which is optional, comprises a matrix (e.g. MD1, MD2), the elements d_{i,j=1...5} thereof representing the distances between fingertips i and j as described before.

The second data structure DS2REF, which is optional, comprises a sequence (e.g. {1, 4, 3, 5, 2}) representing the order in which fingertips are collected from the touchscreen 10.

The third data structure DS3REF, which is optional, comprises a time interval, for example [2s, 3s].

Figure 3 represents in flow chart form the main steps of a particular embodiment of a method in accordance with the invention of identifying a user manipulating the touchscreen device 10.

As a general overview, this method consists first in collecting information relative to the geometry of their hand and/or to the characteristics of the interaction of their fingertips with the touchscreen device (steps E10 to E70), second in comparing this information with patterns of the database DB for recognizing or not the user (steps E80 to E100).

Step E10 is a step of acquiring the coordinates of a plurality of fingertips contacts on the touchscreen device, preferably 4 or 5.

Step E10 is followed by a step E20 of determining for at least one pair of said fingertips contacts, the distance between said fingertips contacts. Preferably the distance is calculated for each possible pair of fingers among 4 or 5 fingers. These distances form the elements of the matrix of distances MD1, MD2 already mentioned.

Step E30 is a step of recording the matrix in a first data structure DS1.

Step E40 is a step of determining the order in which at least two fingertips (preferably 4 or 5) have contacted the touchscreen device 10. In figure 2, the order 0 means that the corresponding finger did not contact the screen. Step E50 is a step of recording the sequence of orders in a second data structure DS2.

Step E60 is a step of determining a duration during which a given number of fingertips (preferably 4 or 5) are all together in contact with the touchscreen device 10. Step E70 is a step of recording this duration in a third data structure DS3.

Once at least one of the data structures DS1, DS2 or DS3 has been obtained, the identifying method of the invention comprises a step E80 of comparing at least one of said first, second or third data structure DS1, DS2, DS3 with the corresponding first, second or third data structure DS1REF, DS2REF, DS3REF of at least one record for a pattern p1, p2, P3 recorded in the database DB.

Comparing DS1 and DS1REF data structures consist in comparing two matrixes of distance.

Comparing DS2 and DS2REF data structures consist in comparing two sequences of orders.

Comparing DS3 and DS3REF data structures consist in checking whether a duration is comprised within a time interval.

The comparison step E80 is followed by a step E90 of deciding whether the hand in contact with the screen corresponds or not to pattern p1, p2, p3 or not.

If it is the case, the user identifier UID1, UID2 recorded in the record for this pattern is displayed on display 14.

The invention also relates to the creation of the records for the patterns in the database DB.

Figure 4 represents in flow chart form the main steps of a particular embodiment of recording method in accordance with the invention.

The recording of a pattern associated to one hand of a user comprises a step F10 of recording an identifier UID of this user in the record; and
- at least one step among :
   - recording F20 in the first data structure DS1REF of said record, for at least one pair of fingers of the hand (preferably 4 or 5), a distance between the fingertips of these fingers ;
   - recording F30 in the second data structure DS2REF of said record, for at least two fingers of said hand, preferably 4 or 5, an order assigned to said fingers;
   - recording F40 a time interval in a third data structure DS1REF of said record.

## Claims

1. A database (DB) for identifying users on a computer-readable medium comprising, for at least one hand of at least one user, a record for a pattern (p), said record comprising an identifier (UID) of said user, a first data structure (DS1REF) comprising, for fingertips contacts of each possible pair of fingers of said hand, a distance between the positions of the fingertips contacts of said fingers on a touchscreen device, and at least one data structure among:
- a second data structure (DS2REF) comprising, for fingertips contacts of at least two fingers of said hand, a sequence of orders assigned to said fingertips contacts for contacting said touchscreen device; and
- a third data structure (DS3REF) comprising a time interval during which a given number of fingertips contacts are all together in contact with said touchscreen device.

2. A method of identifying a user according to a hand tap on a touchscreen device, this method comprising:
- a step (E10) of acquiring the coordinates of a plurality of fingertips contacts on said touchscreen device,
- a step (E20) of determining, for fingertips contacts of each possible pair of fingers of said hand, a distance between the positions of said fingertips contacts of said fingers and (E30) of recording said distance in a first data structure;
- at least one step among:
- a step (E40) of determining a sequence of orders in which fingertips contacts of at least two fingertips have contacted said touchscreen device and (E50) of recording said sequence of orders in a second data structure;
- a step (E60) of determining a duration during which a given number of fingertips contacts are all together in contact with said touchscreen device and (E70) of recording said duration in a third data structure;
- a step (E80) of comparing said first data structure, and at least one of second or third data structure with the corresponding first, second or third data structure of at least one record for a pattern recorded in a database according to Claim 1; and
- a step (E90) of deciding whether said hand corresponds or not to said pattern according to the result of said comparison step and ; if it is the case
- a step (E100) of outputting the user identifier recorded in the record for said pattern.

3. A method according to Claim 2, **characterized in that** said step (E70) of comparing two data structures uses a Support Vector Machine classifier.

4. A touchscreen device (10) comprising:
- means for acquiring the coordinates of a plurality of fingertips contacts on said touchscreen device;
- means for determining for fingertips contacts of each possible pair of fingers of said hand, a distance between the positions of said fingertips contacts of said fingers and for recording said distance in a first data structure;
- means for determining a sequence of orders in which fingertips contacts of at least two fingertips have contacted said touchscreen device and means for recording said sequence of orders in a second data structure;
- means for determining a duration during which a given number of fingertips contacts are all together in contact with said touchscreen device and means for recording said duration in a third data structure;
- means for comparing said first data structure and at least said second or third data structure with the corresponding first, and at least said second or third data structure of at least one record for a pattern recorded in a database according to Claim 1;
- means for deciding whether a hand corresponds or not to the hand associated with said record according to the result of said comparison step ; and
- means for outputting the user identifier recorded in said record.

5. A computer program including instructions for executing steps of the identifying method according to any one of claims 2 to 3 when said program is executed by a computer.

6. A computer-readable storage medium (13) on which is stored a computer program comprising instructions for executing the steps of the identifying method according to any one of claims 2 to 3.

## Patentansprüche

1. Datenbank (DB) zum Identifizieren von Benutzern auf einem computerlesbaren Medium, die für mindestens eine Hand mindestens eines Benutzers eine Aufzeichnung für ein Muster (p) umfasst, wobei die Aufzeichnung eine Kennung (UID) des Benutzers umfasst, eine erste Datenstruktur (DS1REF), die für Fingerspitzenkontakte jedes möglichen Paares von Fingern der Hand einen Abstand zwischen den Positionen der Fingerspitzenkontakte der Finger auf einer Touchscreen-Vorrichtung umfasst, und mindestens eine Datenstruktur unter:
- einer zweiten Datenstruktur (DS2REF), die für Fingerspitzenkontakte von mindestens zwei Fingern der Hand eine Folge von Ordnungen umfasst, die den Fingerspitzenkontakten zum Kontaktieren der Touchscreen-Vorrichtung zugewiesen sind; und
- einer dritten Datenstruktur (DS3REF), die ein Zeitintervall umfasst, in dem eine gegebene Anzahl von Fingerspitzenkontakten alle zusammen mit der Touchscreen-Vorrichtung in Kontakt sind.

2. Verfahren zum Identifizieren eines Benutzers gemäß einem Handtippen auf eine Touchscreen-Vorrichtung, wobei dieses Verfahren Folgendes umfasst:
- einen Schritt (E10) des Erfassens der Koordinaten mehrerer Fingerspitzenkontakte auf der Touchscreen-Vorrichtung,
- einen Schritt (E20) des Bestimmens eines Abstands zwischen den Positionen der Fingerspitzenkontakte der Finger für Fingerspitzenkontakte jedes möglichen Fingerpaares der Hand und (E30) des Aufzeichnens des Abstands in einer ersten Datenstruktur;
- mindestens einen Schritt unter:
- einem Schritt (E40) des Bestimmens einer Folge von Ordnungen, in denen Fingerspitzenkontakte von mindestens zwei Fingerspitzen die Touchscreen-Vorrichtung kontaktiert haben, und (E50) des Aufzeichnens der Folge von Ordnungen in einer zweiten Datenstruktur;
- einem Schritt (E60) des Bestimmens einer Dauer, während der eine gegebene Anzahl von Fingerspitzenkontakten alle zusammen mit der Touchscreen-Vorrichtung in Kontakt sind, und (E70) des Aufzeichnens der Dauer in einer dritten Datenstruktur;
- einem Schritt (E80) des Vergleichens der ersten Datenstruktur und der zweiten und/oder dritten Datenstruktur mit der entsprechenden ersten, zweiten oder dritten Datenstruktur mindestens einer Aufzeichnung für ein Muster, das in einer Datenbank gemäß Anspruch 1 aufgezeichnet ist; und
- einem Schritt (E90) des Entscheidens, ob die Hand dem Muster entspricht oder nicht, gemäß dem Ergebnis des Vergleichsschritts und; falls dies der Fall ist
- einem Schritt (E100) des Ausgebens der Benutzerkennung, die in der Aufzeichnung für das Muster aufgezeichnet ist.

3. Verfahren nach Anspruch 2, **dadurch gekennzeichnet, dass** der Schritt (E70) des Vergleichens von zwei Datenstrukturen einen Support-Vektor-Maschinen-Klassifizierer verwendet.

4. Touchscreen-Vorrichtung (10), die Folgendes umfasst:
- Mittel zum Erfassen der Koordinaten mehrerer Fingerspitzenkontakte auf der Berührungsbildschirmvorrichtung;
- Mittel zum Bestimmen eines Abstands zwischen den Positionen der Fingerspitzenkontakte der Finger für Fingerspitzenkontakte jedes möglichen Fingerpaares der Hand und zum Aufzeichnen des Abstands in einer ersten Datenstruktur;
- Mittel zum Bestimmen einer Folge von Ordnungen, in denen Fingerspitzenkontakte von mindestens zwei Fingerspitzen die Touchscreen-Vorrichtung kontaktiert haben, und Mittel zum Aufzeichnen der Folge von Ordnungen in einer zweiten Datenstruktur;
- Mittel zum Bestimmen einer Dauer, während der eine gegebene Anzahl von Fingerspitzenkontakten alle zusammen mit der Touchscreen-Vorrichtung in Kontakt sind, und Mittel zum Aufzeichnen der Dauer in einer dritten Datenstruktur;
- Mittel zum Vergleichen der ersten Datenstruktur und mindestens der zweiten oder dritten Datenstruktur mit der entsprechenden ersten und mindestens der zweiten oder dritten Datenstruktur mindestens einer Aufzeichnung für ein Muster, das in einer Datenbank nach Anspruch 1 aufgezeichnet ist;
- Mittel zum Entscheiden, ob eine Hand der mit der Aufzeichnung assoziierten Hand entspricht oder nicht, gemäß dem Ergebnis des Vergleichsschritts; und
- Mittel zum Ausgeben der in der Aufzeichnung aufgezeichneten Benutzerkennung.

5. Computerprogramm, das Anweisungen zum Ausführen von Schritten des Identifizierungsverfahrens nach einem der Ansprüche 2 bis 3 beinhaltet, wenn das Programm durch einen Computer ausgeführt wird.

6. Computerlesbares Speichermedium (13), auf dem ein Computerprogramm gespeichert ist, das Anweisungen zum Ausführen der Schritte des Identifizierungsverfahrens nach einem der Ansprüche 2 bis 3 umfasst.

## Revendications

1. Base de données (DB) pour l'identification d'utilisateurs sur un support lisible par ordinateur comprenant, pour au moins une main d'au moins un utilisateur, un enregistrement pour un motif (p), ledit enregistrement comprenant un identifiant (UID) dudit utilisateur, une première structure de données (DS1REF) comprenant, pour les contacts du bout des doigts de chaque paire possible de doigts de ladite main, une distance entre les positions des contacts du bout des doigts desdits doigts sur un dispositif d'écran tactile, et au moins une structure de données parmi :
- une deuxième structure de données (DS2REF) comprenant, pour les contacts du bout des doigts d'au moins deux doigts de ladite main, une séquence d'ordres attribués auxdits contacts du bout des doigts pour entrer en contact avec ledit dispositif à écran tactile ; et
- une troisième structure de données (DS3REF) comprenant un intervalle de temps pendant lequel un nombre donné de contacts du bout des doigts sont tous ensemble en contact avec ledit dispositif à écran tactile.

2. Procédé d'identification d'un utilisateur en fonction d'un tapotement de la main sur un dispositif à écran tactile, ce procédé comprenant :
- une étape (E10) d'acquisition des coordonnées d'une pluralité de contacts du bout des doigts sur ledit dispositif à écran tactile,
- une étape (E20) de détermination, pour les contacts du bout des doigts de chaque paire possible de doigts de ladite main, d'une distance entre les positions desdits contacts du bout des doigts desdits doigts et (E30) d'enregistrement de ladite distance dans une première structure de données ;
- au moins une étape parmi :
- une étape (E40) de détermination d'une séquence d'ordres dans lesquels les contacts du bout des doigts d'au moins deux bouts des doigts sont entrés en contact avec ledit dispositif à écran tactile, et (E50) d'enregistrement de ladite séquence d'ordres dans une deuxième structure de données ;
- une étape (E60) de détermination d'une durée pendant laquelle un nombre donné de contacts du bout des doigts sont tous ensemble en contact avec ledit dispositif à écran tactile, et (E70) d'enregistrement de ladite durée dans une troisième structure de données ;
- une étape (E80) de comparaison de ladite première structure de données, et d'au moins une d'une deuxième ou d'une troisième structures de données avec la première, la deuxième ou la troisième structure de données correspondante d'au moins un enregistrement pour un motif enregistré dans une base de données selon la revendication 1 ; et
- une étape (E90) de décision si ladite main correspond ou non audit motif en fonction du résultat de ladite étape de comparaison et ; si tel est le cas
- une étape (E100) de délivrance en sortie de l'identifiant de l'utilisateur enregistré dans l'enregistrement pour ledit motif.

3. Procédé selon la revendication 2, **caractérisé en ce que** ladite étape (E70) de comparaison de deux structures de données utilise un classificateur de type Support Vector Machine.

4. Dispositif à écran tactile (10) comprenant :
- des moyens pour acquérir les coordonnées d'une pluralité de contacts du bout des doigts sur ledit dispositif à écran tactile ;
- des moyens pour déterminer, pour les contacts du bout des doigts de chaque paire possible de doigts de ladite main, une distance entre les positions desdits contacts du bout des doigts desdits doigts, et pour enregistrer ladite distance dans une première structure de données ;
- des moyens pour déterminer une séquence d'ordres dans lesquels les contacts du bout des doigts d'au moins deux bouts des doigts sont entrés en contact avec ledit dispositif à écran tactile, et des moyens pour enregistrer ladite séquence d'ordres dans une deuxième structure de données ;
- des moyens pour déterminer une durée pendant laquelle un nombre donné de contacts du bout des doigts sont tous ensemble en contact avec ledit dispositif à écran tactile, et des moyens pour enregistrer ladite durée dans une troisième structure de données ;
- des moyens pour comparer ladite première structure de données et au moins lesdites deuxième ou troisième structures de données avec la première structure de données correspondante, et au moins lesdites deuxième ou troisième structures de données d'au moins un enregistrement pour un motif enregistré dans une base de données selon la revendication 1 ;
- des moyens pour décider si une main correspond ou non à la main associée audit enregistrement en fonction du résultat de ladite étape de comparaison ; et
- des moyens pour délivrer en sortie l'identifiant de l'utilisateur enregistré dans ledit enregistrement.

5. Programme d'ordinateur comprenant des instructions pour l'exécution des étapes du procédé d'identification selon l'une quelconque des revendications 2 et 3 lorsque ledit programme est exécuté par un ordinateur.

6. Support de stockage lisible par ordinateur (13) sur lequel est stocké un programme d'ordinateur comprenant des instructions pour l'exécution des étapes du procédé d'identification selon l'une quelconque des revendications 2 à 3.
